# EUROPEAN PATENT APPLICATION

(11) **EP 4 723 305 A1**
(43) Date of publication of application: **08.04.2026**
(21) Application number: 24814313.3
(22) Date of filing: 24.05.2024
(51) Int. Cl.: H01M 10/6554, H01M 10/6556, H01M 10/6568, H01M 10/613, H01M 10/617

(54) **COOLING PLATE FOR BATTERY PACK, BATTERY PACK AND ELECTRICAL DEVICE**

(30) Priority: 31.05.2023 CN 202321372519 U
(71) Applicant: BYD Company Limited, Shenzhen, Guangdong 518118 (CN)
(72) Inventor: YU, Yelong, Shenzhen, Guangdong 518118 (CN); GUO, Shu, Shenzhen, Guangdong 518118 (CN); ZHENG, Jianwu, Shenzhen, Guangdong 518118 (CN); WANG, Yalei, Shenzhen, Guangdong 518118 (CN); WU, Xiangang, Shenzhen, Guangdong 518118 (CN)
(74) Representative: Mathys & Squire
(86) International application number: PCT/CN2024/095058
(87) International publication number: WO 2024/245114

(57) **Abstract**

An electric device is provided, including a battery pack. The battery pack includes a cooling plate for the battery pack. The cooling plate for the battery pack includes a plate body. A cooling flow channel and a confluence flow channel that are used for a coolant to flow are constructed on the plate body, the cooling flow channel forms a plurality of cooling regions on the plate body, the confluence flow channel forms a liquid inlet confluence region and a liquid outlet confluence region on the plate body, and each cooling region separately communicates with the liquid inlet confluence region and the liquid outlet confluence region. The plurality of cooling regions are connected in parallel to each other, a throttling structure is disposed in at least one of the plurality of cooling regions, and a quantity of throttling structures in the plurality of cooling regions progressively decreases from upstream to downstream of a flow direction of the coolant in the liquid inlet confluence region.

## Description

### CROSS-REFERENCE TO RELATED APPLICATIONS

This application claims priority to Chinese Patent Application No. 202321372519.3, filed with the China National Intellectual Property Administration on May 31, 2023 and entitled "COOLING PLATE FOR BATTERY PACK, BATTERY PACK, AND ELECTRIC DEVICE", which is incorporated herein by reference in its entirety.

### TECHNICAL FIELD

The present disclosure relates to the field of battery pack technologies, and in particular, to a cooling plate for a battery pack, the battery pack, and an electric device.

### BACKGROUND

In the related art, a cooling plate for a battery pack usually has a plurality of cooling branches, to achieve an objective of cooling a plurality of battery groups in the battery pack. However, a distance between each cooling branch and a liquid inlet varies. As a result, flow rates in the cooling branches are uneven, affecting temperature consistency of the cooling branches.

### SUMMARY

The present disclosure is intended to resolve at least one of the technical problems in the conventional technology. To this end, an objective of the present disclosure is to provide a cooling plate for a battery pack. Flow rates of a plurality of cooling regions of the cooling plate for the battery pack tend to be the same, so that the plurality of cooling regions have higher temperature consistency and better cooling effect.

The present disclosure further provides a battery pack that has the cooling plate for the battery pack.

The present disclosure further provides an electric device that has the battery pack.

To achieve the objective, an embodiment according to a first aspect of the present disclosure provides a cooling plate for a battery pack. The cooling plate for the battery pack includes a plate body. A cooling flow channel and a confluence flow channel that are used for a coolant to flow are constructed on the plate body, the cooling flow channel forms a plurality of cooling regions on the plate body, the confluence flow channel forms a liquid inlet confluence region and a liquid outlet confluence region on the plate body, and each cooling region separately communicates with the liquid inlet confluence region and the liquid outlet confluence region. The plurality of cooling regions are connected in parallel to each other, a throttling structure is disposed in at least one of the plurality of cooling regions, and a quantity of throttling structures in the plurality of cooling regions progressively decreases from upstream to downstream in a flow direction of the coolant in the liquid inlet confluence region.

Flow rates of the plurality of cooling regions in the cooling plate for the battery pack according to the embodiment of the first aspect of the present disclosure tend to be the same, so that the plurality of cooling regions have higher temperature consistency and better cooling effect.

According to some embodiments of the present disclosure, each cooling region is configured to cool a same quantity of batteries.

According to some embodiments of the present disclosure, each throttling structure includes a first throttling rib. The first throttling rib is provided on one side wall of two opposite side walls of the cooling flow channel, and the first throttling rib extends toward the other side wall of the two opposite side walls of the cooling flow channel, and is spaced apart from the other side wall.

According to some embodiments of the present disclosure, each throttling structure further includes a second throttling rib. The second throttling rib is provided on the other side wall of the two opposite side walls of the cooling flow channel, and the second throttling rib extends toward the one side wall of the two opposite side walls of the cooling flow channel, and is spaced apart from the side wall on which the first throttling rib is provided.

According to some embodiments of the present disclosure, the first throttling rib is spaced apart from the second throttling rib in a length direction of the cooling flow channel in which the first throttling rib and the second throttling rib are located.

According to some embodiments of the present disclosure, for a cooling region in which a plurality of throttling structures are disposed, the first throttling rib and the second throttling rib are alternately provided in the length direction of the cooling flow channel in which the first throttling rib and the second throttling rib are located.

According to some embodiments of the present disclosure, the first throttling rib is perpendicular to the one side wall of the two opposite side walls of the cooling flow channel in which the first throttling rib is located, and the second throttling rib is perpendicular to the other side wall of the two opposite side walls of the cooling flow channel in which the second throttling rib is located.

According to some embodiments of the present disclosure, a length of the first throttling rib is equal to a length of the second throttling rib.

According to some embodiments of the present disclosure, a liquid inlet and a liquid outlet are further constructed on the plate body, the liquid inlet confluence region communicates with the liquid inlet, and the liquid outlet confluence region communicates with the liquid outlet. The quantity of throttling structures in the plurality of cooling regions progressively decreases as a distance between the cooling region in which the throttling structure is located and the liquid inlet increases.

According to some embodiments of the present disclosure, the plate body has a first direction and a second direction that are orthogonal to each other. The plurality of cooling regions are sequentially arranged in the first direction. The liquid inlet confluence region and the liquid outlet confluence region are in the second direction, and are respectively located on two sides of the plurality of cooling regions. The liquid inlet and the liquid outlet are in the first direction, and are located on a same side of the plate body.

According to some embodiments of the present disclosure, each cooling region has a first inlet, a second inlet, and an outlet. The first inlet and the second inlet separately communicate with the liquid inlet confluence region, and the outlet communicates with the liquid outlet confluence region. The first inlet and the second inlet are respectively provided, in the first direction, on two sides of the cooling region in which the first inlet and the second inlet are located, and the outlet is located between the first inlet and the second inlet.

According to some embodiments of the present disclosure, a position of the throttling structure in each cooling region is close to at least one of the first inlet, the second inlet, and the outlet.

According to some embodiments of the present disclosure, each cooling region includes a first cooling sub-region and a second cooling sub-region. The first cooling sub-region and the second cooling sub-region are arranged in an extension direction of the liquid inlet confluence region, and the first cooling sub-region is closer to the liquid inlet than the second cooling sub-region. The first cooling sub-region has the first inlet and communicates with the outlet, and the second cooling sub-region has the second inlet and communicates with the outlet. On a plane perpendicular to a thickness direction of the cooling plate, an area of an orthographic projection of the first cooling sub-region is greater than an area of an orthographic projection of the second cooling sub-region.

According to some embodiments of the present disclosure, each cooling region includes a first cooling sub-region and a second cooling sub-region. The first cooling sub-region and the second cooling sub-region are arranged in an extension direction of the liquid inlet confluence region, and the first cooling sub-region is closer to the liquid inlet than the second cooling sub-region. The first cooling sub-region has the first inlet and communicates with the outlet, and the second cooling sub-region has the second inlet and communicates with the outlet. A quantity of throttling structures in the first cooling sub-region is less than a quantity of throttling structures in the second cooling sub-region.

According to some embodiments of the present disclosure, a liquid inlet turbulence rib is constructed on the plate body. The liquid inlet turbulence rib is provided on a bottom wall of the confluence flow channel in the liquid inlet confluence region, the liquid inlet turbulence rib extends in the extension direction of the liquid inlet confluence region, and the liquid inlet turbulence rib is spaced apart from a side wall of the confluence flow channel in which the liquid inlet turbulence rib is located. The liquid inlet turbulence rib is provided with at least one first notch in an extension direction of the liquid inlet turbulence rib.

According to some embodiments of the present disclosure, there are a plurality of liquid inlet turbulence ribs. The plurality of liquid inlet turbulence ribs are spaced apart in a width direction of the confluence flow channel in which the plurality of liquid inlet turbulence ribs are located, and the first notches of adjacent liquid inlet turbulence ribs are spaced apart from each other in an extension direction of the confluence flow channel in which the liquid inlet turbulence ribs are located.

According to some embodiments of the present disclosure, the first notch and the first inlet are staggered in the extension direction of the liquid inlet confluence region, and the first notch and the second inlet are staggered in the extension direction of the liquid inlet confluence region.

According to some embodiments of the present disclosure, a liquid outlet turbulence rib is constructed on the plate body. The liquid outlet turbulence rib is provided on a bottom wall of the confluence flow channel in the liquid outlet confluence region, the liquid outlet turbulence rib extends in an extension direction of the liquid outlet confluence region, and the liquid outlet turbulence rib is spaced apart from a side wall of the confluence flow channel in which the liquid outlet turbulence rib is located. The liquid outlet turbulence rib is provided with at least one second notch in an extension direction of the liquid outlet turbulence rib.

According to some embodiments of the present disclosure, there are a plurality of liquid outlet turbulence ribs. The plurality of liquid outlet turbulence ribs are spaced apart in a width direction of the confluence flow channel in which the plurality of liquid outlet turbulence ribs are located, and the second notches of adjacent liquid outlet turbulence ribs are spaced apart from each other in an extension direction of the confluence flow channel in which the liquid outlet turbulence ribs are located.

According to some embodiments of the present disclosure, at least one fastening region is further formed on the plate body. The at least one fastening region and the plurality of cooling regions are alternately arranged in the extension direction of the liquid inlet confluence region.

An embodiment according to a second aspect of the present disclosure provides a battery pack. The battery pack includes the cooling plate for the battery pack according to the embodiment of the first aspect of the present disclosure.

The battery pack according to the embodiment of the second aspect of the present disclosure using the cooling plate for the battery pack according to the embodiment according to the first aspect of the present disclosure has advantages such as better cooling effect.

According to some embodiments of the present disclosure, the battery pack further includes a battery group. A plurality of battery groups are disposed in a one-to-one correspondence with the plurality of cooling regions, and each cooling region cools one corresponding battery group.

According to some embodiments of the present disclosure, each battery group includes a plurality of batteries. The plurality of batteries are arranged in a stacked manner in a flow direction of a coolant in the cooling region in which the battery group is located, and a terminal pole is provided at each of two ends of each battery in a length direction. The length direction of the battery, the flow direction of the coolant in the cooling region in which the battery is located, and a thickness direction of the plate body are perpendicular to each other.

According to some embodiments of the present disclosure, a plurality of accommodation regions are formed in the battery pack, and the plurality of battery groups are disposed in the plurality of accommodation regions in a one-to-one correspondence. Each accommodation region has a portion of the confluence flow channel, and the portion of the confluence flow channel is used to cool the battery group in the accommodation region in which the portion of the confluence flow channel is located.

An embodiment according to a third aspect of the present disclosure provides an electric device. The electric device includes the battery pack according to the embodiment of the second aspect of the present disclosure.

The electric device according to the embodiment of the third aspect of the present disclosure using the battery pack according to the embodiment of the second aspect of the present disclosure has advantages such as better cooling effect.

A part of additional aspects and advantages of the present disclosure are provided in the following descriptions, and become apparent from the following descriptions, or are understood from the practice of the present disclosure.

### BRIEF DESCRIPTION OF DRAWINGS

The foregoing and/or additional aspects and advantages of the present disclosure become apparent and readily understood from the descriptions of embodiments with reference to the following accompanying drawings.
FIG. 1 is a diagram of a structure of a cooling plate according to an embodiment of the present disclosure;
FIG. 2 is an enlarged view at a region C in FIG. 1;
FIG. 3 is a block diagram of a battery pack according to an embodiment of the present disclosure; and
FIG. 4 is a diagram of a structure of an electric device according to an embodiment of the present disclosure.

### Reference numerals:

electric device 1000; battery pack 4;
cooling plate 1; battery 2; battery group 220; accommodation region c; terminal pole 201;
plate body 100; liquid inlet 110; liquid outlet 120;
cooling flow channel 200;
cooling region 300; first inlet 310; second inlet 320; first outlet 330; second outlet 340; first cooling sub-region 350; second cooling sub-region 360; outlet 300;
throttling structure 400; first throttling rib 410; second throttling rib 420;
confluence flow channel 500; liquid inlet confluence region 510; liquid inlet turbulence rib 511; first notch 512; liquid outlet confluence region 520; liquid outlet turbulence rib 521; second notch 522;
fastening region 600;
first direction A; second direction B.

### DESCRIPTION OF EMBODIMENTS

The following describes in detail embodiments of the present disclosure, and embodiments described with reference to the accompanying drawings are examples.

In descriptions of the present disclosure, it will be understood that an orientation relationship or a position relationship indicated by the term "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like is an orientation relationship or a position relationship shown based on the accompanying drawings, and is merely intended to facilitate and simplify description of the present disclosure, but is not intended to indicate or imply that a described apparatus or element needs to have a specific orientation or be constructed and operated in a specific orientation. Therefore, such terms will not be understood as a limitation on the present disclosure.

In the descriptions of the present disclosure, "a plurality of" means two or more.

In the descriptions of the present disclosure, that a first feature is "above", "over", and "on" a second feature includes that the first feature is directly above the second feature and that the first feature is obliquely above the second feature, or simply indicates that a horizontal height of the first feature is greater than that of the second feature.

The following describes a cooling plate 1 for a battery pack according to an embodiment of the present disclosure with reference to the accompanying drawings.

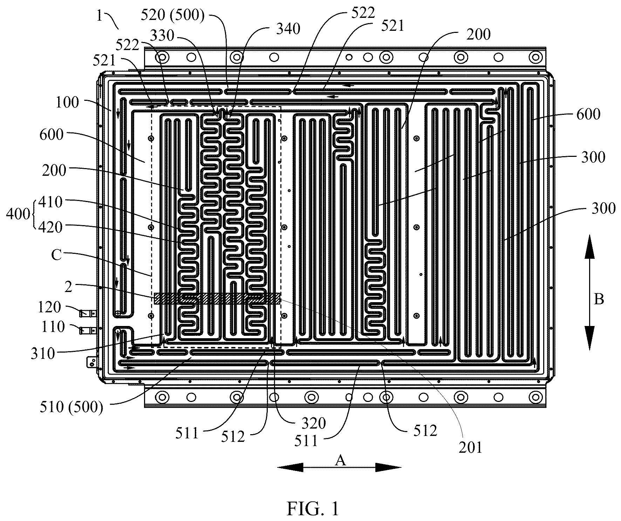

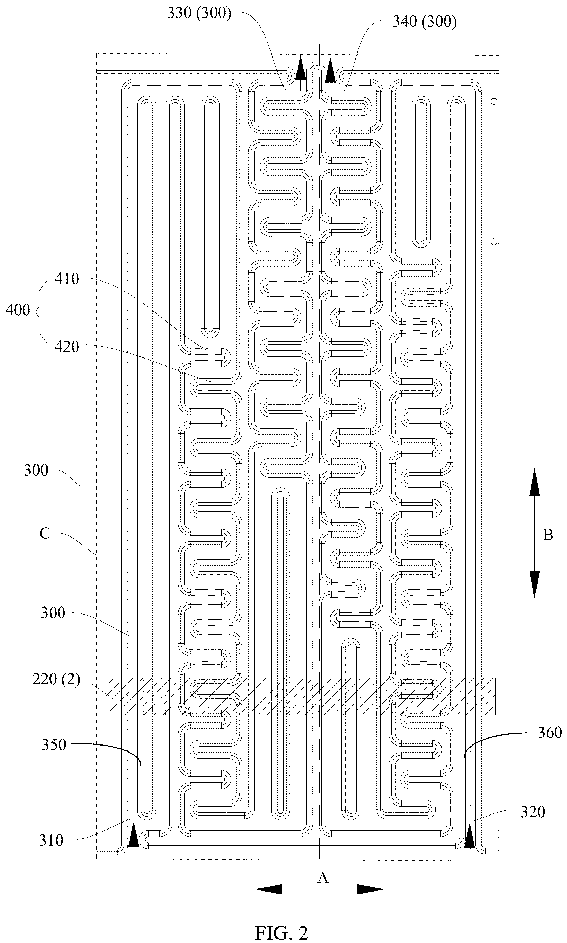

As shown in FIG. 1 and FIG. 2, the cooling plate 1 for the battery pack according to an embodiment of the present disclosure includes a plate body 100.

A cooling flow channel 200 and a confluence flow channel 500 that are used for a coolant to flow are constructed on the plate body 100, the cooling flow channel 200 forms a plurality of cooling regions 300 on the plate body 100, the confluence flow channel 500 forms a liquid inlet confluence region 510 and a liquid outlet confluence region 520 on the plate body 100, and each cooling region 300 separately communicates with the liquid inlet confluence region 510 and the liquid outlet confluence region 520. The plurality of cooling regions 300 are connected in parallel to each other, a throttling structure 400 is disposed in at least one of the plurality of cooling regions 300, and a quantity of throttling structures 400 in the plurality of cooling regions 300 progressively decreases from upstream to downstream of a flow direction of the coolant in the liquid inlet confluence region 510, so that flow rates of the plurality of cooling regions 300 tend to be the same.

Cooling flow channels 200 in each cooling region 300 are disposed as symmetrically as possible, so that stress of the cooling plate 1 during stamping is uniform to a greatest extent, to obtain better flatness and facilitate manufacturing.

It should be noted that a quantity of throttling structures 400 in a cooling region 300 located at the most downstream of the flow direction of the coolant in the liquid inlet confluence region 510 may be zero. A trend of decreasing may be a linear decrease or a stepwise decrease.

In the cooling plate 1 for the battery pack according to the embodiment of the present disclosure, each cooling region 300 separately communicates with the liquid inlet confluence region 510 and the liquid outlet confluence region 520, so that the plurality of cooling regions 300 are connected in parallel with each other. In other words, the coolant does not flow through a cooling region 300 and then flow through a next cooling region 300. Instead, inlets of the plurality of cooling regions 300 are connected to a same flow path, and outlets 300 of the plurality of cooling regions 300 are connected to another flow path.

In addition, the throttling structure 400 is disposed in at least one of the plurality of cooling regions 300, where the throttling structure 400 can change flow resistance of the cooling region 300 in which the throttling structure 400 is located. Moreover, the quantity of throttling structures 400 in the plurality of cooling regions 300 progressively decreases from the upstream to the downstream of the flow direction of the coolant in the liquid inlet confluence region 510, so that the flow rates of the plurality of cooling regions 300 tend to be the same. To be specific, the plurality of cooling regions 300 are sequentially arranged from the upstream to the downstream of the flow direction of the coolant in the liquid inlet confluence region 510, and the quantities of throttling structures 400 in each of the plurality of cooling regions 300 progressively decrease from the upstream to the downstream of the flow direction of the coolant in the liquid inlet confluence region 510.

In other words, in the liquid inlet confluence region 510, a quantity of throttling structures 400 located in an upstream cooling region 300 is greater than a quantity of throttling structures 400 located in a downstream cooling region 300 in the flow direction of the coolant. It will be understood that flow resistance in the upstream cooling region 300 is greater than flow resistance in the downstream cooling region 300.

In the liquid inlet confluence region 510, flow resistance experienced by the coolant in a process of flowing to the upstream cooling region 300 is small. In this case, a sum of flow resistance to the coolant before entering each cooling region 300 and flow resistance to the coolant when being in the cooling region 300 is set to total flow resistance of the cooling region 300 to the coolant. In this way, total flow resistance of the plurality of cooling regions 300 is the same or approximately the same, so that the flow rates of the plurality of cooling regions 300 can be the same or approximately the same, and therefore, it can be ensured that temperatures of the plurality of cooling regions 300 are the same or approximately the same, and cooling effect of the cooling plate 1 on the battery 2 can be improved.

In this way, in the cooling plate 1 for the battery pack according to the embodiment of the present disclosure, the flow rates of the plurality of cooling regions 300 tend to be the same, so that the plurality of cooling regions 300 have higher temperature consistency and better cooling effect.

According to some specific embodiments of the present disclosure, as shown in FIG. 1 and FIG. 2, each cooling region 300 is configured to cool a same quantity of batteries 2. For example, a first cooling region 300 is configured to cool one battery 2, a second cooling region 300 is also configured to cool one battery 2, and each remaining cooling region 300 is configured to cool one battery 2. Alternatively, a first cooling region 300 is configured to cool two batteries 2, a second cooling region 300 is also configured to cool two batteries 2, and each remaining cooling region 300 is configured to cool two batteries 2. By analogy, a first cooling region 300 is configured to cool X batteries 2, a second cooling region 300 is also configured to cool X batteries 2, and each remaining cooling region 300 is configured to cool X batteries 2, where X is a positive integer.

According to some specific embodiments of the present disclosure, as shown in FIG. 1 and FIG. 2, the throttling structure 400 increases the flow resistance of the cooling region 300 in which the throttling structure 400 is located by changing a cross-sectional area and/or a length of the cooling flow channel 200. In other words, the throttling structure 400 increases the flow resistance of the cooling region 300 in which the throttling structure 400 is located by changing at least one of the cross-sectional area and the length of the cooling flow channel 200. In this way, the cooling flow channel 200 is disposed in a more diversified manner, and applicability of the cooling plate 1 can be improved.

According to some specific embodiments of the present disclosure, as shown in FIG. 1 and FIG. 2, each throttling structure 400 includes a first throttling rib 410. The first throttling rib 410 is provided on one side wall of two opposite side walls of the cooling flow channel 200, and the first throttling rib 410 extends toward the other side wall of the two opposite side walls of the cooling flow channel 200, and is spaced apart from the other side wall.

It should be noted that the first throttling rib 410 may be formed by the side wall of the cooling flow channel 200. In other words, the first throttling rib 410 and the side wall of the cooling flow channel 200 are integrally formed. Alternatively, the first throttling rib 410 and the side wall of the cooling flow channel 200 may be separately disposed. In other words, the first throttling rib 410 is mounted on the side wall of the cooling flow channel 200.

The first throttling rib 410 is provided, so that the coolant can flow only through a gap between the first throttling rib 410 and the other side wall of the two opposite side walls of the cooling flow channel 200, and the cross-sectional area of the cooling flow channel 200 is changed, and therefore, an objective of increasing the flow resistance of the cooling region 300 in which the first throttling rib 410 is located is achieved.

According to some specific embodiments of the present disclosure, as shown in FIG. 1 and FIG. 2, each throttling structure 400 further includes a second throttling rib 420. The second throttling rib 420 is provided on the other side wall of the two opposite side walls of the cooling flow channel 200, and the second throttling rib 420 extends toward the one side wall of the two opposite side walls of the cooling flow channel 200, and is spaced apart from the one side wall.

It should be noted that the second throttling rib 420 may be formed by the side wall of the cooling flow channel 200. In other words, the second throttling rib 420 and the side wall of the cooling flow channel 200 are integrally formed. Alternatively, the second throttling rib 420 and the side wall of the cooling flow channel 200 may be separately disposed. In other words, the second throttling rib 420 is mounted on the side wall of the cooling flow channel 200.

The second throttling rib 420 is provided, so that the coolant can flow only through a gap between the second throttling rib 420 and the other side wall of the two opposite side walls of the cooling flow channel 200, and the cross-sectional area of the cooling flow channel 200 is changed at a plurality of positions of the cooling flow channel 200 in combination with the first throttling rib 410, and therefore, the objective of increasing the flow resistance of the cooling region 300 in which the first throttling rib 410 and the second throttling rib 420 are located is achieved. In addition, that both the first throttling rib 410 and the second throttling rib 420 are provided on a same side wall of the cooling flow channel 200 is avoided, so that the entire side walls of the cooling flow channel 200 are subject to a more uniform force.

According to some specific embodiments of the present disclosure, as shown in FIG. 1 and FIG. 2, the first throttling rib 410 is spaced apart from the second throttling rib 420 in a length direction of the cooling flow channel 200 in which the first throttling rib 410 and the second throttling rib 420 are located. As a result, the first throttling rib 410 and the second throttling rib 420 do not need to be provided opposite to each other, so that the cross-sectional area of the cooling flow channel 200 can be controlled at the plurality of positions of the cooling flow channel 200 in the length direction, and the flow resistance in the cooling region 300 can be controlled more effectively.

According to some specific embodiments of the present disclosure, as shown in FIG. 1 and FIG. 2, for a cooling region 300 in which a plurality of throttling structures 400 are disposed, the first throttling rib 410 and the second throttling rib 420 are alternately provided in the length direction of the cooling flow channel 200 in which the first throttling rib 410 and the second throttling rib 420 are located. As a result, a flow path of the coolant is approximately S-shaped in the throttling structure 400, and a length of the flow path of the coolant can be extended, so that the coolant can be fully in contact with the battery 2 for heat exchange. In addition, the length of flow path of the coolant is changed, so that the flow resistance of the cooling region 300 can also be controlled.

According to some specific embodiments of the present disclosure, as shown in FIG. 1 and FIG. 2, the first throttling rib 410 is perpendicular to the one side wall of the two opposite side walls of the cooling flow channel 200 in which the first throttling rib 410 is located. In this way, a probability of accumulation of the coolant at a joint between the first throttling rib 410 and the side wall of the cooling flow channel 200 can be reduced, and processing is facilitated. In addition, the joint between the first throttling rib 410 and the side wall of the cooling flow channel 200 is subject to a more uniform force, and a service life is prolonged.

The second throttling rib 420 is perpendicular to the other side wall of the two opposite side walls of the cooling flow channel 200 in which the second throttling rib 420 is located. In this way, a probability of accumulation of the coolant at a joint between the second throttling rib 420 and the cooling flow channel 200 can be reduced, and processing is facilitated. In addition, the joint between the second throttling rib 420 and the side wall of the cooling flow channel 200 is subject to a more uniform force, and a service life is prolonged.

According to some specific embodiments of the present disclosure, as shown in FIG. 1 and FIG. 2, a length of the first throttling rib 410 is equal to a length of the second throttling rib 420. As a result, a spacing between the first throttling rib 410 and the other side wall of the two opposite side walls of the cooling flow channel 200 is approximately the same as a spacing between the second throttling rib 420 and the one side wall of the two opposite side walls of the cooling flow channel 200. A flow speed of the coolant in the cooling flow channel 200 does not fluctuate repeatedly, and the coolant flows more stably. In addition, because structures of the first throttling rib 410 and the second throttling rib 420 are approximately the same, processing difficulty can be reduced, and processing efficiency can be improved.

According to some specific embodiments of the present disclosure, as shown in FIG. 1 and FIG. 2, a liquid inlet 110 and a liquid outlet 120 are further constructed on the plate body 100. The liquid inlet confluence region 510 communicates with the liquid inlet 110, and the liquid outlet confluence region 520 communicates with the liquid outlet 120. The quantity of throttling structures 400 in the plurality of cooling regions 300 decreases as a distance between the cooling region 300 in which the throttling structure 400 is located and the liquid inlet 110 increases. In other words, the quantity of throttling structures 400 in the plurality of cooling regions 300 progressively decrease as the distance between the cooling region 300 in which the throttling structure 400 is located and the liquid inlet 110 increases.

For example, the throttling structure 400 may not be disposed in a cooling region 300 that is farthest from the liquid inlet 110, and the throttling structure 400 may be disposed in each remaining cooling region 300. Alternatively, the throttling structure 400 is disposed in each cooling region 300. The cooling region 300 being closer to the liquid inlet 110 indicates a shorter length of a liquid inlet confluence region 510 between the cooling region 300 and the liquid inlet 110 and smaller flow resistance between the cooling region 300 and the liquid inlet 110. In other words, the flow resistance between the cooling region 300 and the liquid inlet 110 increases as the distance between the cooling region 300 and the liquid inlet 110 increases. As a result, more throttling structures 400 are disposed in a cooling region 300 that is closer to the liquid inlet 110, so that it can be ensured that sums of flow resistance between each cooling region 300 and the liquid inlet 110 and flow resistance in the cooling region 300 are approximately the same, and the flow rates of the plurality of cooling regions 300 can tend to be the same, to control uniformity of the temperatures.

According to some specific embodiments of the present disclosure, as shown in FIG. 1 and FIG. 2, the plate body 100 has a first direction A and a second direction B that are orthogonal to each other. In FIG. 1 and FIG. 2, the first direction is a direction indicated by an arrow A, and the second direction is a direction indicated by an arrow B. The plurality of cooling regions 300 are sequentially arranged in the first direction A, and the liquid inlet confluence region 510 and the liquid outlet confluence region 520 are in the second direction B, and are respectively located on two sides of the plurality of cooling regions 300. The liquid inlet 110 and the liquid outlet 120 are in the first direction A, and are located on a same side of the plate body 100.

In this case, the liquid inlet 110, the liquid outlet 120, the confluence flow channel 500, and each cooling region 300 are connected to be approximately a U-shaped structure, and a width of the liquid inlet confluence region 510 and a width of the liquid outlet confluence region 520 may be set to be large, to reduce overall flow resistance. In addition, the liquid inlet 110 and the liquid outlet 120 are in the first direction A, and are located on the same side of the plate body 100. This facilitates arrangement of water channels in an entire vehicle.

Moreover, in another embodiment of the present disclosure, the liquid inlet 110 and the liquid outlet 120 may alternatively be provided on different sides, provided that it is ensured that the cooling regions 300 can be connected in parallel through the liquid inlet confluence region 510 and the liquid outlet confluence region 520, that is, the inlet and the outlet 300 of the cooling region 300 are not on a same side.

According to some specific embodiments of the present disclosure, as shown in FIG. 1 and FIG. 2, each cooling region 300 has a first inlet 310, a second inlet 320, and the outlet 300. For example, there may be a plurality of outlets 300, and the plurality of outlets 300 includes a first outlet 330 and a second outlet 340. The first inlet 310 and the second inlet 320 separately communicate with the liquid inlet confluence region 510, and the first outlet 330 and the second outlet 340 separately communicate with the liquid outlet confluence region 520. The first inlet 310 and the second inlet 320 are respectively provided, in the first direction A, close to two sides of a cooling region 300 in which the first inlet 310 and the second inlet 320 are located. The first outlet 330 and the second outlet 340 are close to each other, and are located between the first inlet 310 and the second inlet 320 in the first direction A. Alternatively, there is one outlet 300, the outlet 300 communicates with the liquid outlet confluence region 520, and the outlet 300 is located between the first inlet 310 and the second inlet 320.

The battery 2 in each cooling region 300 may be arranged in the second direction (a direction B in FIG. 1), and a terminal pole 201 is provided at two opposite sides of each battery 2 in the first direction (a direction A in FIG. 1). Because the first inlet 310 and the second inlet 320 are respectively provided, in the first direction (the direction A in FIG. 1), close to the two sides of the cooling region 300 in which the first inlet 310 and the second inlet 320 are located, a coolant flowing into the cooling region 300 through the first inlet 310 and the second inlet 320 can preferentially cool a side at the terminal pole 201 of the battery 2. In this way, a sequence in which the coolant cools the battery 2 matches a heat generation characteristic of the battery 2, so that the cooling effect of the coolant can be improved, and a probability of thermal runaway of the battery 2 can be reduced. The second direction B is a width direction or a thickness direction of the battery 2, and the first direction A is a length direction of the battery 2.

According to some specific embodiments of the present disclosure, as shown in FIG. 1 and FIG. 2, a position of the throttling structure 400 in each cooling region 300 is close to at least one of the first inlet 310, the second inlet 320, and the outlet 300. In this way, while it is ensured that the flow resistance of the cooling region 300 is changed, it is ensured that flow resistance in the cooling regions 300 is approximately the same and that a flow speed of the coolant in the cooling region 300 does not fluctuate, and the cooling effect on the battery 2 is good.

According to some specific embodiments of the present disclosure, as shown in FIG. 1 and FIG. 2, each cooling region 300 includes a first cooling sub-region 350 and a second cooling sub-region 360. The first cooling sub-region 350 and the second cooling sub-region 360 are arranged in an extension direction of the liquid inlet confluence region 510, and the first cooling sub-region 350 is closer to the liquid inlet 110 than the second cooling sub-region 360. The first cooling sub-region 350 has the first inlet 310 and communicates with the outlet 300, and the second cooling sub-region 360 has the second inlet 320 and communicates with the outlet 300. On a plane perpendicular to a thickness direction of the cooling plate 1, an area of an orthographic projection of the first cooling sub-region 350 is greater than an area of an orthographic projection of the second cooling sub-region 360. A quantity of throttling structures 400 in the first cooling sub-region 350 is less than a quantity of throttling structures 400 in the second cooling sub-region 360.

Because the first cooling sub-region 350 is closer to the liquid inlet 110, a cooling capability of a coolant in the first cooling sub-region 350 is better than a cooling capability of a coolant in the second cooling sub-region 360. By increasing an area of the first cooling sub-region 350 and reducing the quantity of throttling structures 400 in the first cooling sub-region 350, the coolant in the first cooling sub-region 350 can be fully used for heat dissipation for the battery 2, and the cooling effect is improved.

According to some specific embodiments of the present disclosure, as shown in FIG. 1 and FIG. 2, a liquid inlet turbulence rib 511 is constructed on the plate body 100. The liquid inlet turbulence rib 511 is provided on a bottom wall of the confluence flow channel 500 in the liquid inlet confluence region 510, the liquid inlet turbulence rib 511 extends in the extension direction of the liquid inlet confluence region 510, and the liquid inlet turbulence rib 511 is spaced apart from a side wall of the confluence flow channel 500 in which the liquid inlet turbulence rib 511 is located. The liquid inlet turbulence rib 511 is provided with at least one first notch 512 in an extension direction of the liquid inlet turbulence rib 511.

When pressure of the coolant is constant, a larger area of a flow cross section of the confluence flow channel 500 in the liquid inlet confluence region 510 indicates larger pressure borne by a wall surface of the confluence flow channel 500 in the liquid inlet confluence region 510. In this case, the liquid inlet turbulence rib 511 is provided, so that the area of the flow cross section of the confluence flow channel 500 in the liquid inlet confluence region 510 can be limited, to ensure that the pressure borne by the wall surface of the confluence flow channel 500 in the liquid inlet confluence region 510 is within a design standard range, and ensure pressure resistance performance of the confluence flow channel 500 in the liquid inlet confluence region 510. In addition, the first notch 512 is provided, so that there are more flow paths for the coolant on two opposite sides of the liquid inlet turbulence rib 511, to ensure flow efficiency of the coolant.

According to some specific embodiments of the present disclosure, as shown in FIG. 1 and FIG. 2, there are a plurality of liquid inlet turbulence ribs 511. The plurality of liquid inlet turbulence ribs 511 are spaced apart in a width direction of the confluence flow channel 500 in which the plurality of liquid inlet turbulence ribs 511 are located, and first notches 512 of adjacent liquid inlet turbulence ribs 511 are spaced apart from each other in an extension direction of the confluence flow channel 500 in which the liquid inlet turbulence ribs 511 are located. As a result, the plurality of liquid inlet turbulence ribs 511 are provided, so that the area of the flow cross section of the confluence flow channel 500 in the liquid inlet confluence region 510 can be further limited. In addition, the first notches 512 of the adjacent liquid inlet turbulence ribs 511 are spaced apart from each other in the extension direction of the confluence flow channel 500 in which the liquid inlet turbulence ribs 511 are located, so that a flow area at each first notch 512 can meet a design requirement, and the pressure resistance performance is ensured.

According to some specific embodiments of the present disclosure, as shown in FIG. 1 and FIG. 2, the first notch 512 and the first inlet 310 are staggered in the extension direction of the liquid inlet confluence region 510, and the first notch 512 and the second inlet 320 are staggered in the extension direction of the liquid inlet confluence region 510. In this way, flow area at each first notch 512 can meet the design requirement, and the pressure resistance performance is ensured.

According to some specific embodiments of the present disclosure, as shown in FIG. 1 and FIG. 2, a liquid outlet turbulence rib 521 is constructed on the plate body 100. The liquid outlet turbulence rib 521 is provided on a bottom wall of the confluence flow channel 500 in the liquid outlet confluence region 520, the liquid outlet turbulence rib 521 extends in an extension direction of the liquid outlet confluence region 520, and the liquid outlet turbulence rib 521 is spaced apart from a side wall of the confluence flow channel 500 in which the liquid outlet turbulence rib 521 is located. The liquid outlet turbulence rib 521 is provided with at least one second notch 522 in an extension direction of the liquid outlet turbulence rib 521.

When pressure of the coolant is constant, a larger flow cross section of the confluence flow channel 500 in the liquid outlet confluence region 520 indicates larger pressure borne by a wall surface of the confluence flow channel 500 in the liquid outlet confluence region 520. In this case, the liquid outlet turbulence rib 521 is provided, so that a size of the flow cross section of the confluence flow channel 500 in the liquid outlet confluence region 520 can be limited, to ensure that the pressure borne by the wall surface of the confluence flow channel 500 in the liquid outlet confluence region 520 is within the design standard range, and ensure pressure resistance performance of the confluence flow channel 500 in the liquid outlet confluence region 520. In addition, the second notch 522 is provided, so that there are more flow paths for the coolant on two opposite sides of the liquid outlet turbulence rib 521, to ensure the flow efficiency of the coolant.

According to some specific embodiments of the present disclosure, as shown in FIG. 1 and FIG. 2, there are a plurality of liquid outlet turbulence ribs 521. The plurality of liquid outlet turbulence ribs 521 are spaced apart in a width direction of the confluence flow channel 500 in which the plurality of liquid outlet turbulence ribs 521 are located, and the second notches 522 of adjacent liquid outlet turbulence ribs 521 are spaced apart from each other in an extension direction of the confluence flow channel 500 in which the liquid outlet turbulence ribs 521 are located. As a result, the plurality of liquid outlet turbulence ribs 521 are provided, so that an area of the flow cross section of the confluence flow channel 500 in the liquid outlet confluence region 520 can be further limited. In addition, the second notches 522 of the adjacent liquid outlet turbulence ribs 521 are spaced apart from each other in the extension direction of the confluence flow channel 500 in which the liquid outlet turbulence ribs 521 are located, so that a flow area at each second notch 522 can meet the design requirement, and the pressure resistance performance is ensured.

According to some specific embodiments of the present disclosure, as shown in FIG. 1 and FIG. 2, at least one fastening region 600 is further formed on the plate body 100. The at least one fastening region 600 and the plurality of cooling regions 300 are alternately arranged in the extension direction of the liquid inlet confluence region 510. The fastening region 600 may be configured to fasten a relative position between the cooling plate 1 and a tray for the battery pack.

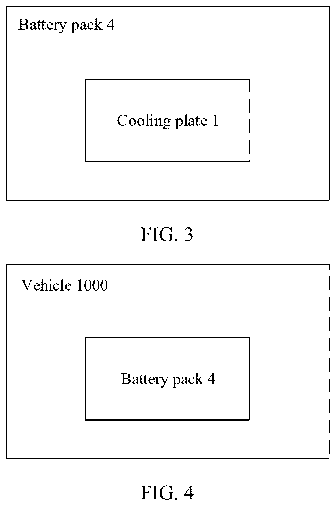

The following describes a battery pack 4 according to an embodiment of the present disclosure with reference to the accompanying drawings. As shown in FIG. 3, the battery pack 4 includes the cooling plate 1 for the battery pack 4 according to the foregoing embodiment of the present disclosure.

The battery pack 4 according to the embodiment of the present disclosure using the cooling plate 1 for the battery pack 4 according to the foregoing embodiment of the present disclosure has advantages such as better cooling effect.

According to some specific embodiments of the present disclosure, the battery pack 4 further includes a battery group 220. A plurality of battery groups 220 are disposed in a one-to-one correspondence with the plurality of cooling regions 300, and each cooling region 300 cools one corresponding battery group 220. As a result, each battery group 220 can be cooled by a coolant of the corresponding cooling region 300, an area of each cooling region 300 may be the same as or close to an area of the corresponding battery group 220, and the area of the cooling region 300 may be correspondingly reduced, so that flow efficiency of the coolant is improved while costs are reduced.

According to some specific embodiments of the present disclosure, each battery group 220 includes a plurality of batteries 2. The plurality of batteries 2 are arranged in a stacked manner in a flow direction of a coolant in the cooling region 300 in which the battery group 220 is located, and a terminal pole 201 is provided at each of two ends of each battery 2 in a length direction. The length direction of the battery 2, the flow direction of the coolant in the cooling region 300 in which the battery 2 is located, and a thickness direction of the plate body 100 are perpendicular to each other. The flow direction of the coolant in the cooling region 300 may generally be an arrangement direction of a liquid inlet confluence region 510 and a liquid outlet confluence region 520, or may be a width direction or a thickness direction of the battery 2. It will be understood from FIG. 1 that a second direction B is the flow direction of the coolant in the cooling region 300.

According to some specific embodiments of the present disclosure, a plurality of accommodation regions c are formed in the battery pack 4, and the plurality of battery groups 220 are disposed in the plurality of accommodation regions c in a one-to-one correspondence. Each accommodation region c has a portion of the confluence flow channel 500, and the portion of the confluence flow channel 500 is configured to cool the battery group 220 in the accommodation region c in which the portion of the confluence flow channel 500 is located. In this way, space of the accommodation region c can be fully used, energy density of the battery pack 4 can be increased, and a battery life of the battery pack 4 can be improved.

The following describes an electric device 1000 according to an embodiment of the present disclosure with reference to the accompanying drawings. As shown in FIG. 4, the electric device 1000 includes the battery pack 4 according to the foregoing embodiment of the present disclosure as shown in FIG. 3. The electric device 1000 may be a vehicle, an electric ship, a flying car, a helicopter, an electric excavator, an energy storage apparatus, or the like.

The electric device 1000 according to the embodiment of the present disclosure using the battery pack 4 according to the foregoing embodiment of the present disclosure has advantages such as better cooling effect.

Other structures and operations of the cooling plate 1 for the battery pack 4, the battery pack 4, and the electric device 1000 according to embodiments of the present disclosure are known to a person of ordinary skill in the art. Details are not described herein.

In the descriptions of this specification, reference terms such as "an embodiment", "some embodiments", "an example embodiment", "an example", "a specific example", or "some examples" mean that a specific feature, a structure, a material, or a characteristic described with reference to the embodiment or the example is included in at least one embodiment or example of the present disclosure. In this specification, example expressions of the terms do not necessarily refer to a same embodiment or example.

Although embodiments of the present disclosure are shown and described, a person of ordinary skill in the art may understand that various changes, modifications, replacement, variations may be made to these embodiments without departing from the principles and purposes of the present disclosure, and that the scope of the present disclosure is defined by the claims and equivalents thereof.

## Claims

1. A cooling plate (1) for a battery pack (4), comprising:
a plate body (100), wherein a cooling flow channel (200) and a confluence flow channel (500) that are used for a coolant to flow are constructed on the plate body (100), the cooling flow channel (200) forms a plurality of cooling regions (300) on the plate body (100), the confluence flow channel (500) forms a liquid inlet confluence region (510) and a liquid outlet confluence region (520) on the plate body (100), each cooling region (300) separately communicates with the liquid inlet confluence region (510) and the liquid outlet confluence region (520), the plurality of cooling regions (300) are connected in parallel to each other, a throttling structure (400) is disposed in at least one of the plurality of cooling regions (300), and a quantity of throttling structures (400) in the plurality of cooling regions (300) progressively decreases from upstream to downstream in a flow direction of a coolant in the liquid inlet confluence region (510).

2. The cooling plate (1) for the battery pack (4) according to claim 1, wherein each cooling region (300) is configured to cool a same quantity of batteries (2).

3. The cooling plate (1) for the battery pack (4) according to claim 1 or 2, wherein each throttling structure (400) comprises:
a first throttling rib (410), wherein the first throttling rib (410) is provided on one side wall of two opposite side walls of the cooling flow channel (200), and the first throttling rib (410) extends toward the other side wall of the two opposite side walls of the cooling flow channel (200), and is spaced apart from the other side wall.

4. The cooling plate (1) for the battery pack (4) according to claim 3, wherein each throttling structure (400) further comprises:
a second throttling rib (420), wherein the second throttling rib (420) is provided on the other side wall of the two opposite side walls of the cooling flow channel (200), and the second throttling rib (420) extends toward the one side wall of the two opposite side walls of the cooling flow channel (200), and is spaced apart from the one side wall.

5. The cooling plate (1) for the battery pack (4) according to claim 4, wherein the first throttling rib (410) is spaced apart from the second throttling rib (420) in a length direction of the cooling flow channel (200) in which the first throttling rib (410) and the second throttling rib (420) are located.

6. The cooling plate (1) for the battery pack (4) according to claim 4 or 5, wherein for a cooling region (300) in which a plurality of throttling structures (400) are disposed, the first throttling rib (410) and the second throttling rib (420) are alternately provided in the length direction of the cooling flow channel (200) in which the first throttling rib (410) and the second throttling rib (420) are located.

7. The cooling plate (1) for the battery pack (4) according to any one of claims 4 to 6, wherein the first throttling rib (410) is perpendicular to the one side wall of the two opposite side walls of the cooling flow channel (200) in which the first throttling rib (410) is located; and
the second throttling rib (420) is perpendicular to the other side wall of the two opposite side walls of the cooling flow channel (200) in which the second throttling rib (420) is located.

8. The cooling plate (1) for the battery pack (4) according to any one of claims 4 to 7, wherein a length of the first throttling rib (410) is equal to a length of the second throttling rib (420).

9. The cooling plate (1) for the battery pack (4) according to any one of claims 1 to 8, wherein a liquid inlet (110) and a liquid outlet (120) are further constructed on the plate body (100), the liquid inlet confluence region (510) communicates with the liquid inlet (110), and the liquid outlet confluence region (520) communicates with the liquid outlet (120); and
the quantity of throttling structures (400) in the plurality of cooling regions (300) progressively decreases as a distance between the cooling region (300) in which the throttling structure (400) is located and the liquid inlet (110) increases.

10. The cooling plate (1) for the battery pack (4) according to claim 9, wherein the plate body (100) has a first direction (A) and a second direction (B) that are orthogonal to each other; and
the plurality of cooling regions (300) are sequentially arranged in the first direction (A), the liquid inlet confluence region (510) and the liquid outlet confluence region (520) are in the second direction (B), and are respectively located on two sides of the plurality of cooling regions (300), and the liquid inlet (110) and the liquid outlet (120) are in the first direction (A), and are located on a same side of the plate body (100).

11. The cooling plate (1) for the battery pack (4) according to claim 10, wherein each cooling region (300) has a first inlet (310), a second inlet (320), and an outlet (300), the first inlet (310) and the second inlet (320) separately communicate with the liquid inlet confluence region (510), and the outlet (300) communicates with the liquid outlet confluence region (520); and
the first inlet (310) and the second inlet (320) are respectively provided, in the first direction (A), on two sides of the cooling region (300) in which the first inlet (310) and the second inlet (320) are located, and the outlet (300) is located between the first inlet (310) and the second inlet (320).

12. The cooling plate (1) for the battery pack (4) according to claim 11, wherein a position of the throttling structure (400) in each cooling region (300) is close to at least one of the first inlet (310), the second inlet (320), and the outlet (300).

13. The cooling plate (1) for the battery pack (4) according to claim 11 or 12, wherein each cooling region (300) comprises a first cooling sub-region (350) and a second cooling sub-region (360), the first cooling sub-region (350) and the second cooling sub-region (360) are arranged in an extension direction of the liquid inlet confluence region (510), the first cooling sub-region (350) is closer to the liquid inlet (110) than the second cooling sub-region (360), the first cooling sub-region (350) has the first inlet (310) and communicates with the outlet (300), and the second cooling sub-region (360) has the second inlet (320) and communicates with the outlet (300); and
on a plane perpendicular to a thickness direction of the cooling plate (1), an area of an orthographic projection of the first cooling sub-region (350) is greater than an area of an orthographic projection of the second cooling sub-region (360).

14. The cooling plate (1) for the battery pack (4) according to claim 11 or 12, wherein each cooling region (300) comprises a first cooling sub-region (350) and a second cooling sub-region (360), the first cooling sub-region (350) and the second cooling sub-region (360) are arranged in an extension direction of the liquid inlet confluence region (510), the first cooling sub-region (350) is closer to the liquid inlet (110) than the second cooling sub-region (360), the first cooling sub-region (350) has the first inlet (310) and communicates with the outlet (300), and the second cooling sub-region (360) has the second inlet (320) and communicates with the outlet (300); and
a quantity of throttling structures (400) in the first cooling sub-region (350) is less than a quantity of throttling structures (400) in the second cooling sub-region (360).

15. The cooling plate (1) for the battery pack (4) according to any one of claims 11 to 14, wherein a liquid inlet turbulence rib (511) is constructed on the plate body (100), the liquid inlet turbulence rib (511) is provided on a bottom wall of the confluence flow channel (500) in the liquid inlet confluence region (510), the liquid inlet turbulence rib (511) extends in the extension direction of the liquid inlet confluence region (510), and the liquid inlet turbulence rib (511) is spaced apart from a side wall of the confluence flow channel (500) in which the liquid inlet turbulence rib (511) is located; and
the liquid inlet turbulence rib (511) is provided with at least one first notch (512) in an extension direction of the liquid inlet turbulence rib (511).

16. The cooling plate (1) for the battery pack (4) according to claim 15, wherein there are a plurality of liquid inlet turbulence ribs (511), the plurality of liquid inlet turbulence ribs (511) are spaced apart in a width direction of the confluence flow channel (500) in which the plurality of liquid inlet turbulence ribs (511) are located, and the first notches (512) of adjacent liquid inlet turbulence ribs (511) are spaced apart from each other in an extension direction of the confluence flow channel (500) in which the liquid inlet turbulence ribs (511) are located.

17. The cooling plate (1) for the battery pack (4) according to claim 15 or 16, wherein the first notch (512) and the first inlet (310) are staggered in the extension direction of the liquid inlet confluence region (510); and
the first notch (512) and the second inlet (320) are staggered in the extension direction of the liquid inlet confluence region (510).

18. The cooling plate (1) for the battery pack (4) according to any one of claims 9 to 17, wherein a liquid outlet turbulence rib (521) is constructed on the plate body (100), the liquid outlet turbulence rib (521) is provided on a bottom wall of the confluence flow channel (500) in the liquid outlet confluence region (520), the liquid outlet turbulence rib (521) extends in an extension direction of the liquid outlet confluence region (520), and the liquid outlet turbulence rib (521) is spaced apart from a side wall of the confluence flow channel (500) in which the liquid outlet turbulence rib (521) is located; and
the liquid outlet turbulence rib (521) is provided with at least one second notch (522) in an extension direction of the liquid outlet turbulence rib (521).

19. The cooling plate (1) for the battery pack (4) according to claim 18, wherein there are a plurality of liquid outlet turbulence ribs (521), the plurality of liquid outlet turbulence ribs (521) are spaced apart in a width direction of the confluence flow channel (500) in which the plurality of liquid outlet turbulence ribs (521) are located, and the second notches (522) of adjacent liquid outlet turbulence ribs (521) are spaced apart from each other in an extension direction of the confluence flow channel (500) in which the liquid outlet turbulence ribs (521) are located.

20. The cooling plate (1) for the battery pack (4) according to any one of claims 1 to 19, wherein at least one fastening region (600) is further formed on the plate body (100), and the at least one fastening region (600) and the plurality of cooling regions (300) are alternately arranged in the extension direction of the liquid inlet confluence region (510).

21. A battery pack (4), comprising the cooling plate (1) for the battery pack (4) according to any one of claims 1 to 20.

22. The battery pack (4) according to claim 21, further comprising:
a battery group (220), wherein a plurality of battery groups (220) are disposed in a one-to-one correspondence with the plurality of cooling regions (300), and each cooling region (300) cools one corresponding battery group (220).

23. The battery pack (4) according to claim 22, wherein each battery group (220) comprises a plurality of batteries (2), the plurality of batteries (2) are arranged in a stacked manner in a flow direction of a coolant in the cooling region (300) in which the battery group (220) is located, and a terminal pole (201) is provided at each of two ends of each battery (2) in a length direction; and
the length direction (A) of the battery (2), the flow direction of the coolant in the cooling region (300) in which the battery (2) is located, and a thickness direction of the plate body (100) are perpendicular to each other.

24. The battery pack (4) according to claim 22 or 23, wherein a plurality of accommodation regions (c) are formed in the battery pack (4), the plurality of battery groups (220) are disposed in the plurality of accommodation regions (c) in a one-to-one correspondence, each accommodation region (c) has a portion of the confluence flow channel (500), and the portion of the confluence flow channel (500) is used to cool the battery group (220) in the accommodation region (c) in which the portion of the confluence flow channel (500) is located.

25. An electric device (1000), comprising the battery pack (4) according to any one of claims 21 to 24.
